**Europäisches Patentamt**

**European Patent Office**

**Office européen des brevets**

(11) Publication number: **0 093 213**
**B1**

# EUROPEAN PATENT SPECIFICATION

(45) Date of publication of patent specification: **09.09.87**

(51) Int. Cl.⁴: **H 01 M 10/36, H 01 M 2/40**

(21) Application number: **82302273.6**

(22) Date of filing: **04.05.82**

(54) **Electrolytes circulation type cell stack secondary battery.**

(43) Date of publication of application:
**09.11.83 Bulletin 83/45**

(45) Publication of the grant of the patent:
**09.09.87 Bulletin 87/37**

(84) Designated Contracting States:
**DE FR GB IT**

(56) References cited:
**EP-A-0 034 492**
**EP-A-0 039 571**
**EP-A-0 089 433**
**US-A-4 197 169**

(73) Proprietor: **Kabushiki Kaisha Meidensha**
**1-17, Ohsaki 2-chome**
**Shinagawa-ku Tokyo 141 (JP)**

(72) Inventor: **Hashimoto, Takafumi**
**B-103, 3-22-19 Asahimachi Nerima-ku**
**Tokyo (JP)**

(74) Representative: **Brock, Peter William et al**
**Michael Burnside & Partners 2 Serjeants' Inn**
**Fleet Street**
**London EC4Y 1HL (GB)**

EP 0 093 213 B1

Courier Press, Leamington Spa, England.

## 0 093 213

**Description**

The present invention relates to electrolytes circulation type cell stack secondary batteries, particularly those in which the negatively active material is a metal such as cadmiun, zinc or lead, and more particularly the invention relates to such a secondary battery which suppresses and prevents the occurrence of three problems due to the flow of a small shunt current, i.e. (1) shunt current loss (2) unequality of quantity of charged electricity and (3) occurrence of abnormal electrodeposition. The term "shunt current" used herein defines electric shunt current. Further the terms "catholyte" used herein defines a "cathode electrolyte"; "anolyte" defines "an anode electrolyte", "cathode" defines a "negative electrode", "anode" defines a "positive electrode", and "potential" denotes "electric potential".

Known cell stack batteries of the above type are designed so that generally, with a view to producing a high voltage from practical point view, a plurality of secondary cells are arranged in layers and connected in series such that each of the electrolytes is supplied to the cathode chamber or the anode chamber of each secondary cell via its catholyte inlet channel or anolyte inlet channel from a catholyte inlet-side common manifold or an anolyte inlet-side common manifold and the electrolyte is delivered via the catholyte outlet channel or the anolyte outlet channel of each secondary cell and through a catholyte outlet-side common manifold or an anolyte outlet-side common manifold.

Thus, since the plurality of secondary cells are connected in series and the circulation of the electrolytes is effected in a parallel connection manner, a small current is diverted to each of the inlet and outlet sides of each secondary cell due to the potential difference between the low potential side electrode and the high potential side electrode of the plurality of series connected cells, thus giving rise to the following difficulties.

(1) Shunt current loss: The loss of heat in the manifolds and the channels due to the flow of small shunt currents.

(2) Unequality of quantity of charge electricity: Since the current value (mA) of small shunt current flow through the channels of the respective cells differs from one cell to another, the value of current flow through the electrodes of the respective cells differs from one cell to another with the resulting unequality of the electrodeposition on the cathode or the quantity of charged electricity.

(3) Occurrence of abnormal electrodeposition: At the low potential side cathode ends to which a small current flows even a small shunt current may result in the occurrence of abnormal electrodeposition due to the current concentration. The invention is directed to alleviating these three problems.

Many different proposals have heretofore been made to overcome such deficiencies due to the flow of small shunt current. For instance, the manifolds and the channels are decreased in diameter and increased in length so as to increase the electric resistance of the electrolytes in the manifolds and the channels and thereby to decrease the shunt current value. While this known method has the effect of providing improvements on some of the foregoing deficiencies due to the flow of shunt current, i.e., the shunt current loss and the unequality of quantity of charged electricity, even if the shunt current is decreased, the shunt current flows in the same direction during the charging period as well as the discharging period with the result that abnormal electrodeposition is caused as the cycle of charge and discharge is repeated, thus impeding the circulation of the electrolytes and causing a short-circuit between the secondary cells and thereby giving a limitation to the cycle life.

Another method has been proposed (US—A—4,197,169) in which a protective current is supplied to the manifolds so that the potential distribution in the manifolds is made equal to the potential distribution in the respective secondary cells thereby overcoming the deficiencies due to the flow of shunt current. While this method prevents the occurrence of shunt current with the resulting solution of the foregoing problems due to the flow of shunt current, the supply of the additional protective current produces an additional energy loss. While this energy loss can be reduced to some extent by decreasing the diameter of the manifolds, there is a limit to the decrease in the manifold diameter since this gives rise to ununiformness in the circulation of the electrolytes to the secondary cells and increase in the fluid head loss for the circulation pumps and thus this prior art method still has the problem of energy loss due to the protective current.

In our EP—A—0089433 there is provided a battery stack of secondary cells connected electrically in series and hydraulically in parallel comprising, a plurality of secondary cells each having a negative electrolyte inlet channel and a negative electrolyte outlet channel for circulation of a common negative electrolyte from a common negative inlet manifold through the secondary cells to a common negative electrolyte outlet manifold; a positive electrolyte inlet channel and a positive electrolyte outlet channel for circulation of a common positive electrolyte from a common positive electrolyte inlet manifold, through the secondary cells to a common positive electrolyte outlet manifold; and first and second additional electrodes positioned adjacent each negative electrolyte inlet and outlet channel each being electrically connected to a negative electrode of a respective secondary cell. The present invention is characterized in that the first and second additional electrodes are disposed respectively only in the negative inlet channel and outlet channel of the lowest electric potential secondary cell, thereby to absorb shunt currents smaller than one thousandth of the charge current within the battery stack.

Figs. 1, 3, 4, 6(a) and 7 show model longitudinal sectional views of cell stack secondary batteries according to specific embodiments of the invention.

2

## 0 093 213

Figs. 2, 5 and 9 show the behaviour of the batteries during the charging period.

Figs. 6(b) and 8 are diagrams showing resistance equivalent circuits for the cell stack secondary batteries.

The present invention will now be described in greater detail with reference to the illustrated embodiments which are included by way of illustration only:—

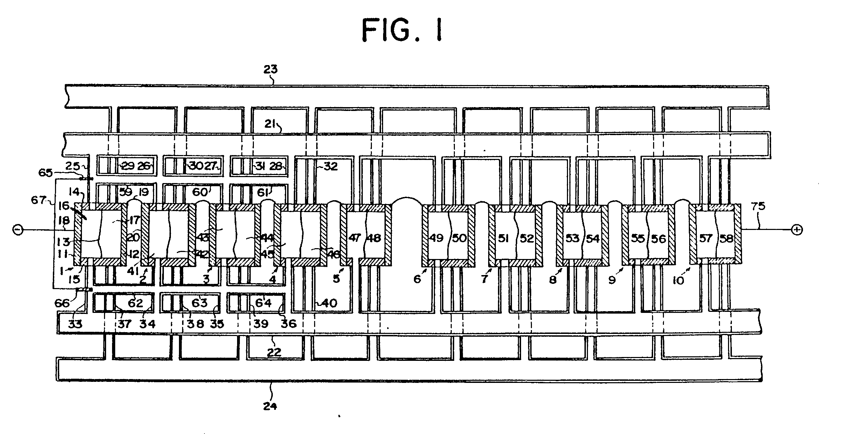

Fig. 1 shows an embodiment of this invention in which the adjoining catholyte channels of low-potential-side secondary cells of a cell stack secondary battery are interconnected with small diameter pipes and additional electrodes are arranged in the vicinity of the junctions between the pipe and the channels of the lowest-voltage secondary cell so as to be connected to and held at the same potential as the cathode terminal of the cell stack secondary battery. By so constructing, it is intended to absorb by these additional electrodes any small current flowing to each cell and thereby to prevent the occurrence of abnormal electrodeposition due to the flow of small shunt current, thus increasing the service life of the battery when it is used in cycles. This embodiment will now be described with reference to the Figure.

In the Figure, numerals 1, 2, 3 . . ., 10 designate secondary cells and the illustrated embodiment includes ten secondary cells arranged in layers. The description will now be made mainly with reference to the secondary cell 1. Numeral 11 designates a cathode, 12, an anode, and 13 an ion transmission separator arranged practically midway between the electrodes 11 and 12. Numeral 14 and 15 designate electrode frames. Numeral 16 designates a cathode chamber, 17 an anode chamber, and 18 a cathode terminal of the secondary cell 1. The anode 12 of the cell 1 is connected to a cathode 20 of the adjoining secondary cell 2 by a connector 19. Of course, where it is desired to provide a bipolar type cell stack battery, it is only necessary to arrange in layers only one or the other of the anode 11 and the cathode 12 which have the same potential.

Numeral 21 designates a catholyte inlet-side common manifold, 25, 26, 27, 28, . . . catholyte inlet channels for connecting the catholyte inlet-side common manifold 21 to the cathode chambers 16, 41, 43, 45, . . . Numeral 22 designates a catholyte outlet-side common manifold, and 33, 34, 35, 36 . . . catholyte outlet channels for connecting the catholyte outlet-side common manifold 22 to the cathode chambers 16, 41, 43, 45, . . . In like manner, numeral 23 designates an anolyte inlet-side common manifold, 24 an anolyte outlet-side common manifold, 29, 30, 31, 32, . . . anolyte inlet channels, and 37, 38, 39, 40, . . . anolyte outlet channels. These electrolyte inlet channels 25, 26, 27, 28 . . . and 29, 30, 31, 32 . . . and the electrolyte outlet channels 33, 34, 35, 36 . . . and 37, 38, 39, 40 . . . are extended perpendicular to the layer-building direction of the electrode frames 14 and 15 and arranged side by side along the electrode frames 14 and 15.

The cell stack secondary battery constructed as described above is the same with the prior art battery so that the catholyte is fed into the cathode chambers 16, 41, . . . of the secondary cells, 1, 2, . . . by a pump (not shown) by way of the catholyte inlet-side common manifold 21 and the electrolyte inlet channels 25, 26 . . ., and the electrolyte is delivered to the outlet-side common manifold 22 by way of the electrolyte outlet channels 33, 34, . . . On the other hand, the anolyte is introduced into the anode chambers 17, 42, . . ., of the secondary cells 1, 2, . . ., by a pump (not shown) from the anolyte inlet-side common manifold 23 via the electrolyte inlet channels 29, 30, . . ., and the electrolyte is delivered to the anolyte outlet-side common manifold 24 via the anolyte outlet channels 37, 38, . . .

In accordance with the invention, the cell stack secondary battery constructed as described above is further provided with small-diameter pipes 59, 60, 61 and 62, 63, 64 which respectively interconnect the adjoining ones of the lower voltage-side catholyte channels 25, 26, 27, 28 and 33, 34, 35, 36 of the secondary cells 1, 2, 3, 4, . . . Since these pipes 59, 60, . . ., 64 are not intended to flow the catholyte therethrough, it is only necessary that these pipes are filled with the catholyte to simply connect the adjoining channels electrically by the cathode electrolyte and thus they can be extremely small in diameter. When the cell stack secondary battery is in operation, a shunt current also flows to the pipes. Thus, in order to reduce the loss due to the shunt current, the pipes should be as small as possible in diameter and hence electric resistance within the pipes should be as high as possible.

In addition, electrodes 65 and 66 are respectively arranged in the vicinity of the junctions between the pipes 59 and 62 of the catholyte channels 25 and 33 of the secondary cell 1 having the lowest voltage and the electrodes 65 and 66 are electrically connected to the cathode terminal 18 of the cell stack secondary battery by a connector 67 to maintain them at the same electric potential as the cathode 11. The electrodes 65 and 66 may be mounted by for example fitting them into the catholyte channels 25 and 33, respectively, and hermetically fixing them in place.

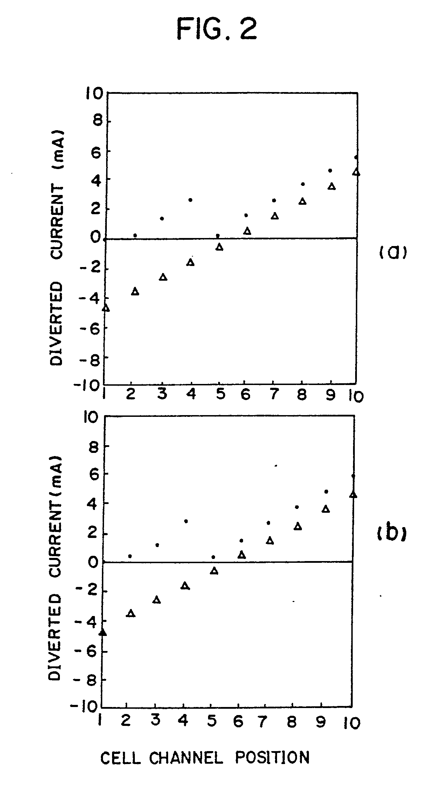

Fig. 2 shows characteristic diagrams showing the results of the shunt current measurement during the charging period of the cell stack secondary batteries. In the Figure, marks "Δ" show the results of the prior art cell stack battery and spot marks show the results of the cell stack battery according to the invention. In the Figure, (a) shows the measurement results at the catholyte inlets, and (b) shows the measurement results at the catholyte outlets. The ordinate represents the shunt current value (mA) and the abscissa represents the channel positions of the respective secondary cells. The value of the shunt current flowing out of each cathode chamber is designated as positive. This test was effected by measuring the shunt current values of the respective channels with a clip-on ammeter and the values indicate those at the expiration of 90 to 100 minutes after the start of the charging with the charging voltage of 22 V and the charging current of 12 A. As will be seen from Fig. 2, there was a small current flow to each of the cathode

3

of the prior art cell stack battery and the flow of small current to the cathode was completely eliminated in the case of the cell stack battery of this invention.

When the test was continued further and the batteries were disassembled after the expiration of 25 hours through the cycles of charge and discharge to compare the electrodeposition of zinc on the cathodes, the electrodeposition of dendritic zinc on the cathode was seen in the vicinity of the channels in the prior art battery and there was no such abnormal electrodeposition in the battery incorporating the present invention. Then, the loss caused in the channels and the manifolds due to the provision of the electrodes 65 and 66 was calculated from the measured shunt current values and electric resistances of the electrolytes in the manifolds and the channels and the result was 0.9 W in the case incorporating the present invention showing only a very slight increase over 0.6 W of the prior art battery.

When the protective current according to the invention of U.S.P. No. 4,197,169 was applied to the above prior art battery, the required protective current was about 280 mA and the calculated system loss was 21.5 W. While this battery is capable of realizing some decrease in the loss due to the protective current by decreasing the diameter of the manifolds, it is difficult to decrease the loss to the level of the present invention due to the limitations imposed by the circulation of the electrolytes and the pump loss.

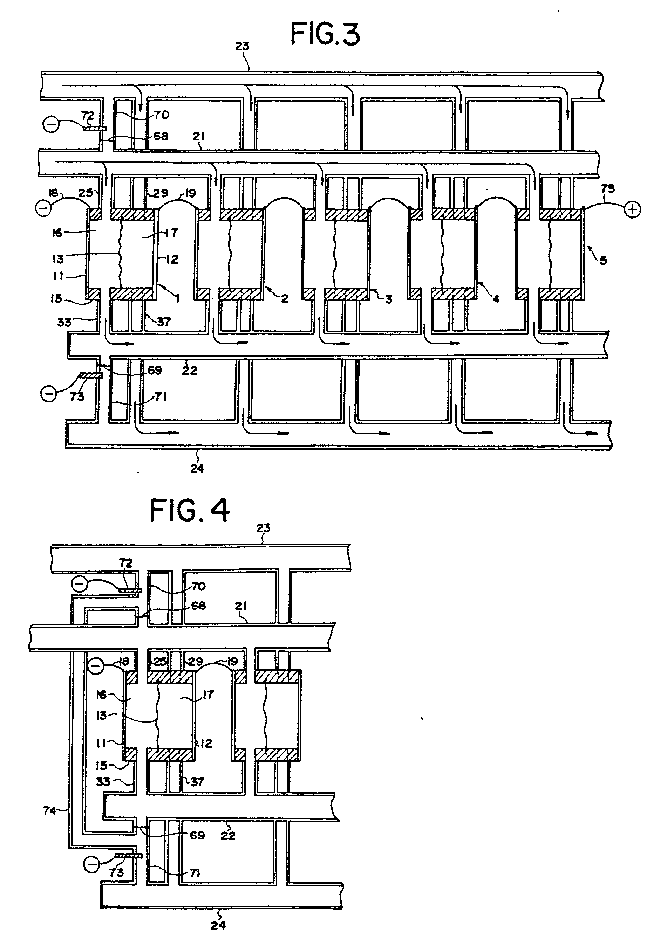

Fig. 3 shows another embodiment of the present invention which differs from the first embodiment in that the catholyte manifolds 21 and 22 of the cell stack secondary battery are respectively connected to the anolyte manifolds 23 and 24 by channels 70 and 71. An ion-permeable, electrolyte-impermeable additional separators 68 and 69 are provided in channels 70 and 71 respectively; each negative electrolyte is separated by the additional separators 68 and 69 from each positive electrolyte, and additional electrodes 72 and 73 are arranged at positions where they are immersed in the anolyte and are connected to the cathode 11 of the secondary cell 1, thereby absorbing any small shunt current.

The transmission separators 68 and 69 transmit ions but they do not transmit the electrolytes.

Of course, the electrodes 72 and 73 may respectively be fitted into the anolyte manifolds 23 and 24.

Also, as shown in the modification of the invention in Fig. 4, the connecting channels 70 and 71 may be interconnected by a bypass pipe 74 so that they are hydraulically inter-connected on the anolyte side.

By virtue of this modification, the anolyte is circulated so as to satisfactorily supply the bromine in the electrolyte to the additional electrodes 72 and 73.

In either of the cases, the electrodes 72 and 73 are immersed in the anolyte so that a reaction of $Br_2^- \to Br - 2e^-$ occurs and no electrodeposition of Zn takes place, thus maintaining the electrode surfaces in the initial condition. As a result, no maintenance is required for the electrodes 72 and 73 over a long period of service. Then in the respective secondary cells 1, 2 . . ., a reaction of $Zn^{++} + 2e^- \to Zn$ occurs in the cathode chambers 16, 41, . . . and a reaction of $2Br_2 \to Br_2 + 2e^-$ occurs in the anode chambers 17, 42, . . ., thus delivering a desired voltage across the cathode terminal 18 and an anode terminal 75.

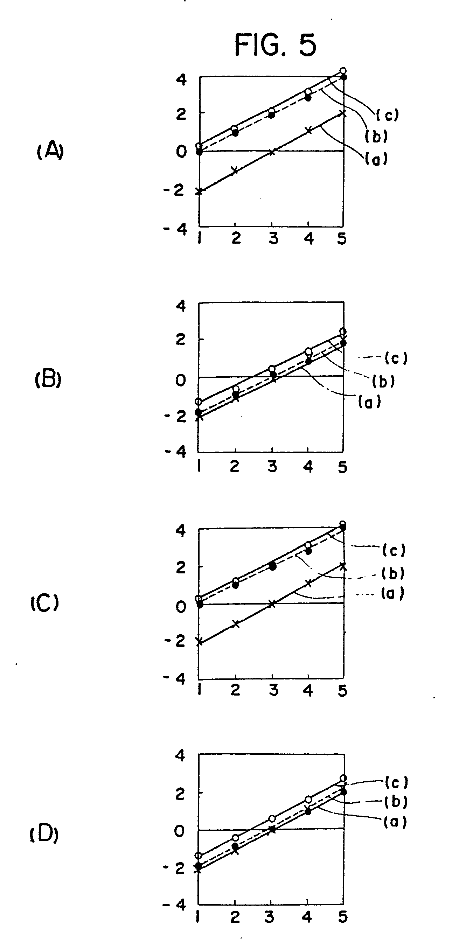

Fig. 5 shows characteristic diagrams showing by way of examples the results of shunt current measurements during the charging period of the battery shown in Fig. 3, with (A) showing the shunt current values mA at the catholyte inlets, (B) those at the anolyte inlets, (C) those at the catholyte outlets and (D) those at the anolyte outlets. The positive shunt current values represent the shunt currents flowing out to the manifolds from the cathode and the negative values represent those flowing into the cathode. The abscissa represents the channel positions of the respective secondary cells (here the number of the cell stack secondary cells is 5). In each of the characteristic diagrams, (a) shows the prior art battery (without the electrodes 72 and 73), (b) shows the most simplified form of cell stack secondary battery, i.e., the battery of Fig. 1 without the pipes 59, 60, . . . 63, 64, and (c) shows the cell stack secondary battery of Fig. 3 in comparison with one another. Note that in accordance with this test, the shunt current values of the respective channels indicate those measured by a clip-on ammeter. In this test, the charging voltage was 11.3 V, the charging current was 12 A and the current values were those measured at the expiration of 90 to 110 minutes after the beginning of the charging.

As will be seen from the measurement results, in accordance with the cell stack battery of this invention the flow of shunt current to the cathode of each of the secondary cells was eliminated as was the case with the most simplified cell stack secondary battery. Also, when the test was continued and the batteries were disassembled at the expiration of 25 hours through the cycles of charge and discharge to examine the electrodeposition of Zn on the cathode of the respective secondary cells, there was no occurrence of such abnormal electrodeposition in the case of the cell stack battery of Fig. 3. On the other hand, the examination of the electrode surface condition in the cathode chamber 16 and the anode chamber 17, respectively, showed that in the case of the most simplified cell stack battery (with the electrodes immersed in the catholyte) the electrodeposition of Zn took place and it took the form of a dendritic abnormal zinc electrodeposition and that no Zn electrodeposition occurred and the initial conditions were maintained in the case of the cell stack battery shown in Fig. 3 (with the electrodes immersed in the anolyte).

From the foregoing description it will be seen that in accordance with the invention there is provided a cell stack secondary battery which eliminates the flow of shunt current to the cathode, thereby eliminating the occurrence of abnormal electrodeposition in the vicinity of the cathode ends and also eliminating the need for maintenance over a long period of service.

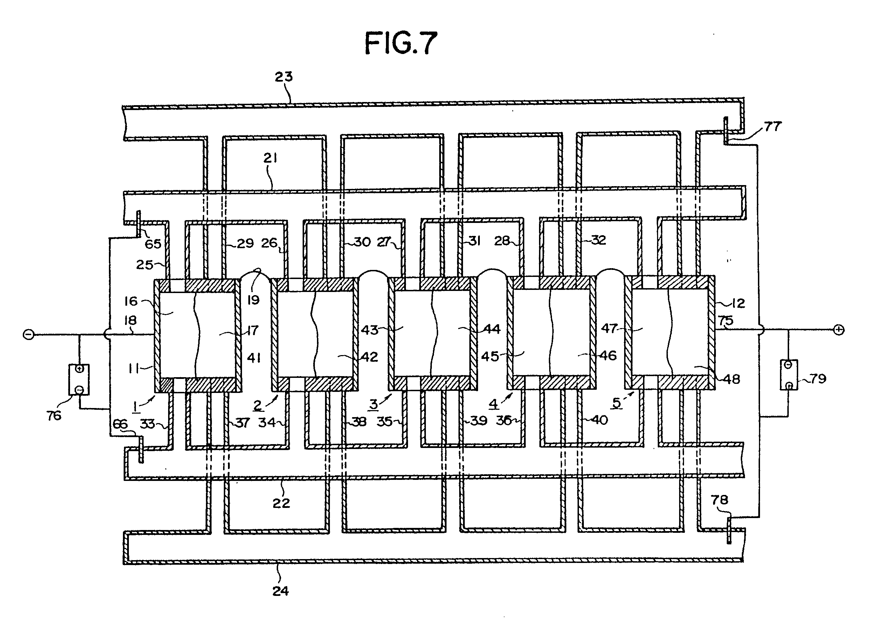

The present invention includes still another form which will be described hereunder. Fig. 7 shows still another embodiment in the form of a zinc bromide system five-layer cell stack secondary battery. As shown in the Figure, electrodes 65 and 66 are fitted respectively into catholyte manifolds 21 and 22 and their potentials are adjusted by an auxiliary power supply 76 to a value lower than the potential shown by a cathode 11 of a secondary cell 1, thereby preventing any shunt current occurring in the catholyte circulation system from flowing into cathode chambers 16, 41, 43, . . . of the respective secondary cells from the catholyte manifolds 21 and 22. Also, electrodes 77 and 78 are respectively fitted into anolyte manifolds 23 and 24 and the potential of these additional electrodes is held by an auxiliary power supply 79 higher than the potential shown by an anode 12 of a secondary cell 5, thereby allowing any shunt current caused in the anolyte circulation system to flow into anode chambers 17, 42, 44, . . . of the respective secondary cells.

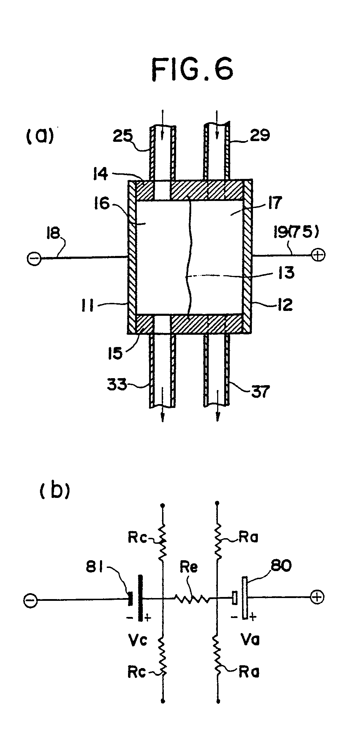

The grounds for the above arrangement will be readily understood from the following description in connection with Fig. 6. More specifically, the Figure (a) shows a longitudinal sectional view of a secondary cell and (b) shows the corresponding resistance equivalent circuit. In the Figure (6) numeral 80 designates an anode, 81 a cathode, Va an anode potential, Vc a cathode potential, and Va+Vc an open-circuit potential of the secondary cell. Also, designated by Rc is an electric resistance of a catholyte channel liquid Ra an electric resistance of an anolyte channel liquid (the same value is assumed for the outlet and inlet in both cases), and Re a secondary cell internal electric resistance.

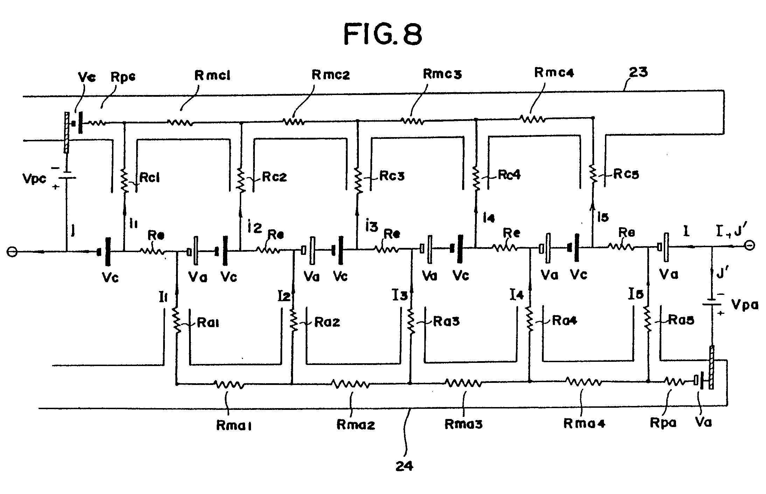

Fig. 8 shows a resistance equivalent circuit of the five-layer cell stack battery of Fig. 7. Fig. 8 is constructed on the basis of the equivalent circuit shown in Fig. 6. If the channels and manifolds on the outlet and inlet sides of the electrolyte circulation paths are respectively selected to be equal in size, the resistance equivalent circuit can be represented for example on the inlet sides of the electrolyte circulation paths as shown in Fig. 8.

$i_1 \sim i_5$: shunt currents flowing between the cathode chambers and the catholyte manifold via the respective cathode side channels (the values of shunt currents flowing out of the cathode chambers are assumed negative.)

$I_1 \sim I_5$: shunt currents flowing between the anode chambers and the anolyte manifold via the respective anode side channels (the values of shunt currents flowing into the anode chambers are assumed positive).

$Rc_1 \sim Rc_5$: cathode side electric resistances of channel internal liquid.

$Ra_1 \sim Ra_5$: anode side electric resistances of channel internal liquid.

$Rmc_1 \sim Rmc_5$: interchannel cathode side electric resistances of manifold internal liquid.

$Rma_1 \sim Rma_5$: interchannel anode side electric resistances of manifold internal liquid.

(The numbers are given in order of the five cell stack cells from the lowest potential side).

Vpc: cathode side auxiliary supply voltage.

vpa: anode side auxiliary supply voltage.

J: sum total of shunt currents flowing in the cathode side channels.

J': sum total of shunt currents flowing in the anode side channels.

I+J': input and output current of the cell stack battery.

With these conventions, the following equations are obtained on the anode side according to the Kirchhoff's law.

$$J'=I_1+I_2+I_3+I_4+I_5 \tag{1}$$

$$Vpa=J' \cdot Rpa+I_5 Ra_5 \tag{2}$$

$$Va+Vc+(I+I_5)Re=I_4 \cdot Ra_4-I_5 Ra_5+Rma_4(I_1+I_2+I_3+I_4) \tag{3}$$

$$Va+Vc+(I+I_5+I_4-i_5)Re=I_3 \cdot Ra_3-I_4 Ra_4+Rma_3 \cdot (I_1+I_2+I_3) \tag{4}$$

$$Va+Vc+(I+I_5+I_4+I_3-i_5-i_4)Re=I_2 Ra_2-I_3 Ra_3+Rma_2(I_1+I_2) \tag{5}$$

$$Va+Vc+(I+I_5+I_4+I_3+I_2-i_5-i_4-i_3)Re=I_1 Ra_1-I_2 Ra_2+Rma_a \cdot I_1 \tag{6}$$

In like manner, the following equations are obtained on the cathode side.

$$Va+Vc+(I+I_5+I_4-i_5)Re=i_5 Rc_5-i_4 Rc_4+Rmc_4 \cdot i_5 \tag{7}$$

$$Va+Vc+(I+I_5+I_4+I_3-i_5-i_4)Re=i_4 Rc_4-i_3 Rc_3+Rmc_3(i_5+i_4) \tag{8}$$

$$Va+Vc+(I+I_5+I_4+I_3+I_2-i_5-i_4-i_3)Re=i_3 Rc_3-i_2 Rc_2+Rmc_2(i_5+i_4+i_3) \tag{9}$$

$$Va+Vc+(I+I_5+I_4+I_3+I_2+I_1-i_5-i_4-i_3-i_2)Re=i_2 Rc_2-i_1 Rc_1+Rmc_1(i_5+i_4+i_3+i_2) \tag{10}$$

$$Vpc=J \cdot Rpc+i_1 Rc_1 \tag{11}$$

$$J=i_1+i_2+i_3+i_4+i_5 \tag{12}$$

5

The foregoing are the circuit equations obtained from Fig. 8. In Fig. 8, the positions of Vc correspond to the positions of the respective cathode and thus if the currents flowing through these positions are uniform, there will be no unequality of the quantity of the charged electricity.

If the value of current passing through each cathode is a fixed value $\alpha$, then the following conditions are obtained

$$I - J' + I_5 - i_5 = \alpha \qquad (13)$$

$$I_4 = i_4 \qquad (14)$$

$$I_3 = i_3 \qquad (15)$$

$$I_2 = i_2 \qquad (16)$$

$$I_1 = i_1 \qquad (17)$$

In other words, it is only necessary that the values which satisfy the equations (14), (15), (16) and (17) are determined in accordance with the equations (1) to (12) so as to maintain the equality of the quantity of charged electricity.

In designing the present five-layer cell stack $ZnBr_2$ battery, the respective values are determined in the following manner.

Assumption 1) All the shunt current value have a fixed value i

$$i = i_1 = i_2 = i_3 = i_4 = i_5 = I_1 = I_2 = I_3 = I_4 = I_5 \qquad (18)$$

Assumption 2) The manifold internal electric resistances have a fixed value

$$Rm = Rmc_1 = Rmc_2 = Rmc_3 = Rmc_4 = Rma_1 = Rma_2 = Rma_3 = Rma_4 \qquad (19)$$

The electrode potentials are replaced with the open-circuit voltage.

$$Vo = Vc + Va \qquad (20)$$

The equations (1)—(12) are modified as follows:

$$J = J' = 5 \cdot i \qquad (21)$$

$$Vpa = J \cdot Rpa + iRa_5 \qquad (22)$$

$$Vo + (I - i)Re = i(Ra_4 - Ra_5 + 4Rm) \qquad (23)$$

$$= i(Ra_3 - Ra_4 + 3Rm) \qquad (24)$$

$$= i(Ra_2 - Ra_3 + 2Rm) \qquad (25)$$

$$= i(Ra_1 - Ra_2 + Rm) \qquad (26)$$

$$= i(Rc_5 - Rc_4 + Rm) \qquad (27)$$

$$= i(Rc_4 - Rc_3 + 2Rm) \qquad (28)$$

$$= i(Rc_3 - Rc_2 + 3Rm) \qquad (29)$$

$$= i(Rc_2 - Rc_1 + 4Rm) \qquad (30)$$

$$Vpc = JRpc + iRc_1 \qquad (31)$$

By approximating $V_o+(I-i)Re=Vo+IRe$, the following readjustments are made

$$Ra_5=Rc_1 \tag{32}$$

$$Ra_4=Rc_2 \tag{33}$$

$$Ra_3=Rc_3 \tag{34}$$

$$Ra_2=Rc_4 \tag{35}$$

$$Ra_1=Rc_5 \tag{36}$$

$$Rpa=Rpc=Rp \tag{37}$$

$$Vpa=Vpc=Vp \tag{38}$$

$$Vp=i(5Rp+Rc_5) \tag{39}$$

$$Vo+IRe=i(Ra_4-Ra_5+4Rm) \tag{40}$$

$$=i(Ra_3-Ra_4+3Rm) \tag{41}$$

$$=i(Ra_2-Ra_3+2Rm) \tag{42}$$

$$=i(Ra_1-Ra_2+Rm) \tag{43}$$

The respective values are determined by using the equations (32) to (43). Then, by selecting the condition constants of the battery as $Vo=1.8V$, $Re=2\times10^{-2}\ \Omega$, $Rm=63.5\ \Omega$, on charge $I=10A$, shunt current value on charge $i=4mA$, $Ra_5=Rc_1=100\ \Omega$, and $Rp=30\ \Omega$, then the following are obtained.

$$Ra_4=Rc_2=346\ \Omega$$

$$Ra_3=Rc_3=655.5\ \Omega$$

$$Ra_2=Rc_4=1028.5\ \Omega$$

$$Ra_1=Rc_5=1465\ \Omega$$

$$Vp=1V$$

The above values are for charging and thus the left terms of the equations (40) to (43) vary for open-circuit condition and/or discharging. As a result, in order to satisfy the equations (40) to (43) with the resistances being fixed, it is only necessary to vary the value of the shunt current i correspondingly. Namely, the value of Vp in the equation (39) is varied. The following Table 1 shows the specific values corresponding to these conditions.

TABLE 1

|  | $Vo+IRe$ (V) | i (mA) | Vp (V) |
|---|---|---|---|
| Charge | 2.0 | 4 | 1 |
| Open-circuit | 1.8 | 3.6 | 0.9 |
| Discharge | 1.6 | 3.2 | 0.8 |

Fig. 7 shows by way of example the five-layer cell stack zinc bromide battery constructed in accordance with the above-mentioned design. The channels each have a diameter and length corresponding to the previously mentioned design resistance value. The corresponding relations between the channels and the resistances are as follows:

$Rc_1 \rightarrow 25$, $33$, $Rc_2 \rightarrow 26$, $34$, $Rc_3 \rightarrow 27$, $35$, . . ., $Ra_1 \rightarrow 29$, $37$, $Ra_2 \rightarrow 30$, $38$, $Ra_3 \rightarrow 31$, $39$, . . ., etc.

The electrodes 65 and 66 are respectively fitted into the catholyte common manifolds 21 and 22 and the electrodes 77 and 78 are respectively fitted into the positive electrolyte common manifolds 23 and 24.

These electrodes are hermetically fixed in place. The electrodes 65 and 66 are connected to the negative terminal of the auxiliary power supply 76 whose positive terminal is connected to a cathode terminal 18 of the cell stack secondary battery. The electrodes 77 and 78 are connected to the positive terminal of the auxiliary power supply 79 whose negative terminal is connected to an anode terminal 75 of the cell stack secondary battery.

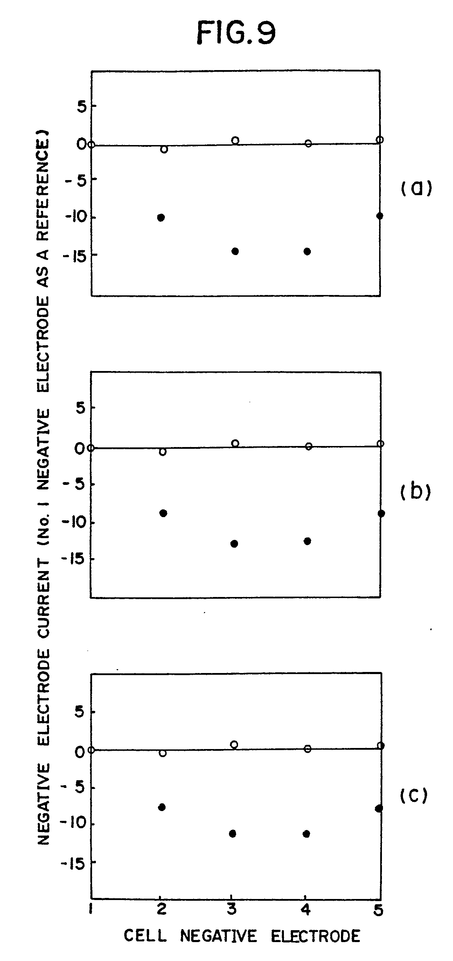

Fig. 9 shows the measurements of the values of the shunt currents which were supplied to the respective channels when ten cycles of three patterns, i.e., charge, open-circuit and discharge were performed in the five-layer zinc bromide secondary battery. The abscissa represents the numbers of the secondary cell cathode in order of increasing voltage and the ordinate represents the corresponding measured values. In the Figures, marks of "O" indicate the measured values obtained in accordance with the invention and marks of "●" indicate those obtained without the application of the invention, that is, those obtained by replacing the channel portions of the respective cells with the conventional ones to make the cells equal in channel electric resistance (all the channel electric resistances ≑ 1500 Ω). Fig. 9 shows cathode current distribution diagrams showing the values of the currents through the cathode of the respective cells which were obtained from the shunt current values obtained in the above-mentioned manner and which were shown in terms of the value of the current through the lowest voltage cathode as a zero point. If the time factor is involved in the current values, these diagrams show charged electricity quantity distributions in terms of mA · h. In Fig. 9, (a) shows the distribution for charging condition, (b) the distribution for open-circuit condition (c) the distribution for discharging condition. As will be seen from the diagrams in (a), (b) and (c) of Fig. 9, the currents through the cathode are not the same in the case without the application of the invention (marked "●") and the existence of unequality of quantity of electricity is presumed, whereas the existence of equality of quantity of electricity is seen in the case using the present invention (marked "O"). After the ten cycles of operation, the electrodeposition of zinc on the cathode was examined with the result that there was the electrodeposition of the dendritic zinc on the cathode near the channels in the case without the application of the invention and that there was no trace of such abnormal electrodeposition in the case using the invention.

Also, the results of the calculations made from the measured shunt current values and the electrolyte electric resistance values in the manifolds and the channels showed that in the case using the invention the loss was 0.48 W showing only a slight increase over 0.14 W of the case without the application of the invention. On the other hand, in the case of the cell stack battery using the protective current according to the US—A—4,197,169 but without the application of the invention the required protective current was about 32 mA and the calculated value of the loss due to the protective current was estimated to amount to 3.6 W. It will be seen from the foregoing that the present invention can realize a cell stack secondary battery which is small in loss, reduces the difficulties due to shunt current and is long in cycle life.

While, in the above-described embodiment, the electrodes 65, 66 and 77, 78 are respectively fitted into the catholyte manifolds 21 and 22 and the anolyte manifolds 23 and 24, it is possible to fit the electrodes 65 and 66 into the catholyte channels 25 and 33, respectively, and fit the electrodes 77 and 78 into the corresponding anolyte inlet and outlet channels.

The present invention comprises the following solutions for providing improvements relating to the deficiencies due to shunt current, i.e., the occurrence of abnormal electrodeposition, unequality of quantity of charged electricity and shunt current loss.

In other words, in the anode chambers on the higher voltage side shunt currents flow out to the anolyte manifolds from the anode chambers and shunt currents are introduced from the anolyte manifolds into the anode chambers on the lower voltage side. In this case, the potential of the electrodes fitted into the catholyte manifolds is adjusted by the auxiliary power supply in such a manner that in the secondary cells on the lower voltage side the value of a shunt current flowing out of the negative electrolyte chamber becomes higher than that of a shunt current flowing into the anode chamber.

On the other hand, any unequality of quantity of charged electricity is caused by the fact that the sum total of the shunt currents flowing in and out through the channels is not zero in each of the secondary cells of the cell stack secondary battery except the highest voltage cell. Thus, in an attempt to overcome this deficiency additional channels and an additional manifold are provided to connect the anode chambers of the secondary cells to each other and an additional electrode is fitted into the additional channel or the additional manifold and connected to the positive terminal of the cell stack secondary battery through an auxiliary power supply. While a small current flows into the anode chambers from this additional electrode, as will be described later, considering the size of the channels and the manifold interconnecting the anode chambers the internal electrolyte electric resistances of the channels and the manifold are adjusted in such a manner that a current for supplementing the small currents flowing out of the secondary cells is supplied into the anode chambers through the channels and the manifold interconnecting these chambers and thus the small currents flowing in and out are reduced to zero on the whole in each of the secondary cells of the cell stack secondary battery except the highest voltage cell, thereby overcoming the problem of unequality of quantity of charged electricity.

From the foregoing description it will be seen that the cell stack secondary battery with shunt current protective means according to the invention has the effect of making the shunt current flowing out of the cathode chamber equal to the shunt current flowing out of the anode chamber and thereby eliminating the

8

occurrence of abnormal electrodeposition and the unequality of quantity of charged electricity and reducing the shunt current loss. Thus, the invention can be said to be very useful in practical applications.

## Claims

1. A battery stack of secondary cells (1 . . . 10) connected electrically in series (19) and hydraulically in parallel comprising a plurality of secondary cells (1 . . . 10) each having a negative electrolyte inlet channel (25) and a negative electrolyte outlet channel (33) for circulation of a common negative electrolyte from a common negative inlet manifold (21) through the secondary cells to a common negative electrolyte outlet manifold (22); a positive electrolyte inlet channel (29) and a positive electrolyte outlet channel (37) for circulation of a common positive electrolyte from a common positive electrolyte inlet manifold (23) through the secondary cells to a common positive electrolyte outlet manifold (24) and first and second additional electrodes (65, 66) positioned adjacent each negative electrolyte inlet and outlet channel, each being electrically connected to a negative electrode (11) of a respective secondary cell; characterized in that the first and second additional electrodes (65, 66) are disposed respectively only in the negative inlet channel (25) and outlet channel (33) of the lowest electric potential secondary cell (1), thereby to absorb shunt currents smaller than one thousandth of the charge current within the battery stack.

2. A battery stack of secondary cells according to Claim 1 characterized in that the negative electrolyte inlet channel (25) and outlet channel (33) of the secondary cell (1) of the lowest electric potential are respectively hydraulically connected to at least adjacent negative electrolyte inlet channel (26) and outlet channel (34) by a pipe (59, 62); with the proviso that each two adjacent negative electrolyte inlet channels (25 to 28) and outlet channels (33 to 36) are connected hydraulically to each other by a pipe (60, 61, 63, 64).

3. A battery stack of secondary cells according to Claim 1 characterized in that the negative electrolyte inlet channel (25) and outlet channel (33) of the lowest electric potential secondary cell (1) are inter-connected respectively to the common positive electrolyte inlet manifold (23) and outlet manifold (24) via respective pipes (70, 71); each pipe having an ion-permeable, electrolyte-impermeable additional separator (68, 69) therein, and in that the additional electrodes (72, 73) are each positioned on the positive electrolyte side of said respective separator.

4. A battery stack of secondary cells according to Claim 3 characterized in that said respective pipes (70, 71) are hydraulically inter-connected by a bypass (74) adapted to contain positive electrolyte.

5. A battery stack according to any preceding Claim characterized in that third and fourth auxiliary electrodes (77, 78) are fitted into the inlet and outlet positive electrolyte manifolds (23, 24) adjacent a secondary cell (5) having the highest electric potential, the third and fourth electrodes being electrically connected to the positive electrode of the cell (5), and in that the first and second additional electrodes are adapted to be held at an electric potential lower than that of the negative electrode (11) of the lowest electric potential secondary cell (1), and in that the third and fourth additional electrodes (77, 78) are adapted to be held at an electric potential higher than that of the positive electrode (12) of the highest electric potential secondary cell (5).

6. A battery stack of secondary cells according to Claim 5 characterized in that the first auxiliary power supply (76) is provided to reduce the electric potential of the first and second additional electrode (65, 66) to a value lower than that of the negative electrode (11) of the lowest electric potential secondary cell (1) and/or a second auxiliary power supply (79) provided to increase the electric potential of the third and fourth additional electrode (77, 78) to a value higher than that of the positive electrode (12) of the highest electric potential secondary cell (5).

## Patentansprüche

1. Batterieblock aus Sekundärelementen (1 . . . 10), welche elektrisch in Reihe (19) und hydraulisch parallelgeschaltet sind, mit einer Mehrzahl von Sekundärelementen (1 . . . 10), von denen jedes einen Einlaßkanal (25) für negativen Elektrolyt und einen Auslaßkanal (33) für negativen Elektrolyt aufweist, zur Zirkulation eines gemeinsamen negativen Elektrolyts von einer gemeinsamen Einlaßsammelleitung (21) für negativen Elektrolyt durch die Sekundärelemente zu einer gemeinsamen Auslaßsammelleitung (22) für negativen Elektrolyt; mit einem Einlaßkanal (29) für positiven Elektrolyt und einem Auslaßkanal (37) für positiven Elektrolyt, zur Zirkulation eines gemeinsamen positiven Elektrolyts von einer Einlaßsammelleitung (23) für positiven Elektrolyt durch die Sekundärelemente zu einer gemeinsamen Auslaßsammelleitung (24) für positiven Elektrolyt, und einer ersten und zweiten zusätzlichen Elektrode (65, 66), welche jedem Einlaß- und Auslaßkanal für negativen Elektrolyt benachbart angeordnet sind, von denen jede mit einer negativen Elektrode (11) eines jeweiligen Sekundärelements elektrisch verbunden ist; dadurch gekennzeichnet, daß die erste und zweite zusätzliche Elektrode (65, 66) jeweils nur in dem Einlaßkanal (25) bzw. Auslaßkanal (33) für negativen Elektrolyt des auf dem niedrigsten elektrischen Potential befindlichen Sekundärelements (1) angeordnet sind, um dabei Nebenschlußströme zu absorbieren, welche kleiner als 1/1000 des Ladestroms innerhalb des Batterieblocks sind.

2. Batterieblock aus Sekundärelementen nach Anspruch 1, dadurch gekennzeichnet, daß der Einlaßkanal (25) und Auslaßkanal (33) für negativen Elektrolyt des auf dem niedrigsten elektrischen Potential befindlichen Sekundärelements (1) jeweils hydraulisch mit mindestens einem benachbarten Einlaßkanal (26) und Auslaßkanal (34) für negativen Elektrolyt über ein Rohr (59, 62) verbunden sind; mit der Bedingung, daß jeweils zwei benachbarte Einlaßkanäle (25—28) und Auslaßkanäle (33—36) für negativen Elektrolyt hydraulisch über ein Rohr (60, 61, 63, 64) miteinander verbunden sind.

3. Batterieblock aus Sekundärelementen nach Anspruch 1, dadurch gekennzeichnet, daß der Einlaßkanal (25) und der Auslaßkanal (33) für negativen Elektrolyt des auf dem niedrigsten elektrischen Potential befindlichen Sekundärelements (1) jeweils mit der gemeinsamen Einlaßsammelleitung (23) und Auslaßsammelleitung (24) für positiven Elektrolyt jeweils über Rohre (70, 71) verbunden sind; wobei jedes Rohr einen ionendurchlässigen, Elektrolyt-undurchlässigen zusätzlichen Separator (68, 69) enthält, und daß die zusätzlichen Elektroden (72, 73) alle auf der positiven Elektrolyt-Seite des jeweiligen Separators angeordnet sind.

4. Batterieblock aus Sekundärelementen nach Anspruch 3, dadurch gekennzeichnet, daß die genannten jeweiligen Rohre (70, 71) hydraulisch über einen Bypass (74), die geeignet ist, positiven Elektrolyt zu enthalten, miteinander verbunden sind.

5. Batterieblock aus Sekundärelementen nach einem der vorangehenden Ansprüche, dadurch gekennzeichnet, daß eine dritte und vierte Hilfselektrode (77, 78) in die Einlaß- und Auslaß-Sammelleitung (23, 24) für positiven Elektrolyt, welche einem Sekundärelement (5) benachbart sind, das sich auf dem höchsten elektrischen Potential befindet, eingesetzt sind, wobei die dritte und vierte Elektrode mit der positiven Elektrode, des Elements (5) elektrisch verbunden sind, und daß die erste und zweite zusätzliche Elektrode geeignet sind, auf einem geringeren elektrischen Potential als dasjenige der negativen Elektrode (11) des auf dem niedrigsten elektrischen Potential befindlichen Sekundärelements (1) gehalten zu werden, und daß die dritte und vierte zusätzliche Elektrode (77, 78) geeignet sind, auf einem höheren elektrischen Potential als dasjenige der positiven Elektrode (12) des auf dem höchsten elektrischen Potential befindlichen Sekundärelements (5) gehalten zu werden.

6. Batterieblock aus Sekundärelementen nach Anspruch 5, dadurch gekennzeichnet, daß eine erste Hilfs-Spannungsquelle (76) vorgesehen ist, um das elektrische Potential der ersten und zweiten zusätzlichen Elektrode (65, 66) auf einen niedrigeren Wert als den der negativen Elektrode (11) des auf dem niedrigsten elektrischen Potential befindlichen Sekundärelements (1) zu vermindern und/oder eine zweite Hilfs-Spannungsquelle (79) vorgesehen ist, um das elektrische Potential der dritten und vierten zusätzlich Elektrode (77, 78) auf einen höheren Wert als den der positiven Elektrode (12) des auf dem höchsten elektrischen Potential befindlichen Sekundärelements (5) zu erhöhen.

**Revendications**

1. Ensemble de batterie formé d'éléments secondaires (1 . . . 10) branchés en série (19) du point de vue électrique et branches en parallèle du point de vue hydraulique et comportant une pluralité d'éléments secondaires (1 . . . 10) possédant chacun un canal (25) d'admission d'un électrolyte négatif et un canal (33) de sortie de l'électrolyte négatif, pour la circulation d'un électrolyte négatif commun depuis un collecteur (21) d'admission de l'électrolyte négatif commun, à travers les éléments secondaires et jusqu'à un collecteur (22) de sortie de l'électrolyte négatif commun; un canal (29) d'admission d'un électrolyte positif et un canal (37) de sortie de l'électrolyte-positif pour la circulation d'un électrolyte positif commun depuis un collecteur (23) d'admission de l'électrolyte positif commun, à travers les éléments secondaires et jusqu'à un collecteur (24) de sortie de l'électrolyte positif commun, et des première et seconde électrodes additionnelles (65, 66) disposées au voisinage de chacun des canaux d'admission et de sortie de l'électrolyte négatif, et dont chacune est raccordée électriquement à une électrode négative (11) d'un élément secondaire respectif; caractérisé en ce que les première et seconde électrodes additionnelles (65, 66) sont disposées respectivement uniquement dans les canaux (25 et 33) d'admission et de sortie de l'électrolyte négatif de l'élément secondaire (1) qui possède le potentiel électrique le plus faible, de manière à absorber des courants de shunt inféreiurs à un millième du courant de charge dans l'ensemble de batterie.

2. Ensemble de batterie formé d'éléments secondaires selon la revendication 1, caractérisé en ce que le canal (25) d'admission de l'électrolyte négatif et le canal (33) de sortie de l'électrolyte négatif de l'élément secondaire (1) qui possède le potentiel électrique le plus faible, sont raccordés respectivement, du point de vue hydraulique, à au moins un canal voisin (26) d'admission de l'électrolyte négatif et à au moins un canal voisin (34) de sortie de l'électrolyte négatif, au moyen d'une canalisation (59, 62); moyennant le fait qu'il est prévu que chaque ensemble de deux canaux voisins (25 à 28) d'admission de l'électrolyte négatif et chaque ensemble de deux canaux voisins (33 à 36) de sortie d'électrolyte négatif sont raccordés du point de vue hydraulique par une canalisation (60, 61, 63, 64).

3. Ensemble de batterie formé d'éléments secondaires selon la revendication 1, caractérisé en ce que le canal (25) admission de l'électrolyte négatif et le canal (33) de sortie de l'électrolyte négatif de l'élément secondaire (1), qui possède le potentiel électrique le plus faible, sont interconnectés respectivement au collecteur (23) d'admission de l'électrolyte positif commun et au collecteur (24) de sortie de l'électrolyte positif commun par l'intermédiaire de canalisations respectives (70, 71); chaque canalisation contenant en elle un séparateur additionnel (68, 69) perméable pour les ions et imperméable pour les électrolytes, et que les électrodes additionnelles (72, 73) sont disposées chacune sur le côté de l'électrolyte positif dudit séparateur respectif.

4. Ensemble de batterie formé d'éléments secondaires selon la revendication 3, caractérisé en ce que lesdites canalisations respectives (72, 71) sont interconnectées du point de vue hydraulique par un conduit de dérivation (74) pouvant contenir l'électrolyte positif.

5. Ensemble de batterie selon l'une quelconque des revendications précédentes, caractérisé en ce que des troisième et quatrième électrodes auxiliaires (77, 78) sont montées dans les collecteurs (23, 24) d'entrée et de sortie de l'électrolyte positif, qui sont voisins d'un élément secondaire (5) possédant le potentiel électrique le plus élevé, les troisième et quatrième électrodes étant raccordées électriquement à l'électrode positive de l'élément (5), et en ce que les premières et secondes électrodes additionnelles peuvent être maintenues à un potentiel électrique inférieur à celui de l'électrode négative (11) de l'élément secondaire (1) possédant le potentiel électrique le plus faible, et que les troisième et quatrième électrodes additionnelles (77, 78) peuvent être maintenues à un potentiel électrique supérieur à celui de l'électrode positive (12) de l'élément secondaire (5) possédant le potentiel le plus élevé.

6. Ensemble de batterie formé d'éléments secondaires selon la revendication 5, caractérisé en ce que la première alimentation en énergie auxiliaire (76) est prévue de manière à réduire le potentiel électrique des première et seconde électrodes additionnelles (65, 66) à une valeur inférieure à celle de l'électrode négative (11) de l'élément secondaire (1) possédant le potentiel électrique le plus faible et/ou qu'une seconde alimentation en énergie auxiliaire (79) est prévue pour accroître le potentiel électrique des troisième et quatrième électrodes additionnelles (77, 78) à une valeur supérieure à celle de l'électrode positive (12) de l'élément secondaire (5) possédant le potentiel électrique le plus élevé.

# FIG. I

0 093 213

# FIG. 2

# FIG.3

# FIG. 4

# FIG. 5

(A)

(B)

(C)

(D)

# 0 093 213

## FIG.6

(a)

(b)

5

# FIG.7

# FIG.8

0 093 213

# FIG.9